# EUROPÄISCHE PATENTSCHRIFT

(11) **EP 1 969 918 B1**
(45) Veröffentlichungstag und Bekanntmachung des Hinweises auf die Patenterteilung: **26.10.2016**
(21) Anmeldenummer: 08101967.1
(22) Anmeldetag: 25.02.2008
(51) Int. Cl.: A01F 15/08, A01F 15/07

(54) **Rundballenpresse und Verfahren zur Änderung der Reibung an deren Seitenwänden**
Round baling press and method for altering the friction on the side walls
Presse à ballots ronds et procédé de modification de la friction sur ses parois latérales

(30) Priorität: 14.03.2007 DE 102007012174
(43) Veröffentlichungstag der Anmeldung: 17.09.2008
(73) Patentinhaber: Deere & Company, Moline, IL 61265 (US)
(72) Erfinder: Viaud, Jean, 70100 Gray (FR)
(74) Vertreter: Magin, Ludwig Bernhard

(56) Entgegenhaltungen:
- EP-A- 1 364 574
- DE-A1- 2 739 935
- DE-A1- 3 920 377
- US-A- 4 334 467
- US-A- 4 370 848

## Beschreibung

Die Erfindung betrifft eine Rundballenpresse mit einem Rahmen zur Aufnahme von Seitenwänden einer Ballenbildungskammer, wobei die Seitenwände tragende Teile des Rahmens voneinander wegbewegbar sind, und ein Verfahren zur Änderung der Reibung zwischen den Seitenwänden einer Rundballenpresse und den Stirnflächen eines in einer Ballenbildungskammer gebildeten Rundballens.

Aus der EP A 1364574 ist es bekannt, Seitenwände einer Rundballenpresse gegenüber einem Rahmen beweglich zu lagern, so dass sie voneinander weg- oder aufeinander zubewegt werden können. Die Bewegung wird durch vertikal schwenkbare Arme eingeleitet, die zum Öffnen der Ballenbildungskammer angehoben werden. Beim Öffnen der Ballenbildungskammer werden die Seitenwände voneinander wegbewegt, damit die Reibung auf die Stirnflächen des Rundballens abnimmt und der Rundballen somit leichter ausgeworfen werden kann.

Ferner offenbart die US 4 334 467 A eine Ballenpresse mit eine Ballenpresskammer begrenzenden Seitenwänden, wobei eine Seitenwand zur seitlichen Translationsbewegung mittels einem hydraulischen Zylinder ausgebildet ist, um so den Sperrdruck auf einen Ballen bei einer Ballenablage zu reduzieren.

Eine weitere Ballenpresse ist in DE 39 20 377 A1 offenbart. Dort wird ein zylindrischer Pressraum in axialer Richtung durch angetriebene Seitenwände abgeschlossen. Die Seitenwände laufen in gleicher Umlaufrichtung wie den Pressraum radial begrenzende Förderelemente, aber mit höherer Umfangsgeschwindigkeit. Dadurch soll eine höhere Pressdichte erzielt und ein Stehenbleiben des Ballens im Pressraum vermieden werden.

Das der Erfindung zugrunde liegende Problem wird darin gesehen, diese vorteilhafte Wirkung des Standes der Technik mit einem geringeren technischen Aufwand zu erzielen.

Dieses Problem wird erfindungsgemäß durch die Lehre des Patentanspruchs 1 bzw. 7 gelöst, wobei in den weiteren Patentansprüchen die Lösung in vorteilhafter Weise weiterentwickelnde Merkmale aufgeführt sind.

Auf diese Weise bedarf es keiner eigenen Lagerung und Verstellvorrichtung der Seitenwände, denn diese werden starr an dem Rahmen und dessen Teilen befestigt. Stattdessen wird der Rahmen insgesamt oder in dem auslassseitigen Bereich gespreizt, wodurch wiederum die Reibung an den Stirnseiten des Rundballens verringert wird. Mechanische Verstellvorrichtungen mit Gleitflächen entfallen ganz. Es kann dabei ausreichen, wenn nur eine Seite des Rahmens wegbewegt wird. Eine Bewegung im einstelligen Zentimeter-Bereich ist genug, um den Effekt zu erzielen.

Der technische Aufwand ist dann am geringsten, wenn die die Seitenwände tragenden Teile unter Ausnutzung der stofflichen Elastizität des Rahmens oder der Teile relativ zueinander beweglich sind. Der Rahmen der Rundballenpresse ist in Draufsicht im Wesentlichen wie ein liegendes "U" ausgebildet, so dass sowohl der Steg, als auch die beiden Schenkel des "U" um wenige Grade gebogen werden können. Die richtige Elastizität wird durch die Formgebung des Stegs und der Schenkel des "U" erreicht, wobei insbesondere in der Biegerichtung verlaufende Materialflächen entsprechend ausgebildet werden müssen.

Der Rahmen bzw. dessen Teile können auch in Zonen unterschiedlicher Steifigkeit unterteilt werden, so dass die weniger steifen Zonen eine imaginäre Schwenkachse bilden, um die die Teile mit den Seitenwänden bewegt werden. Diese Zonen können durch eine unterschiedliche Wärmebehandlung, Wanddicken, Steghöhen und dergleichen gebildet werden. Während diese Zonen in einem einstückigen Teil ausgebildet werden können, ist es auch möglich, solche Zonen durch Übergänge oder Anschlüsse an den Teilen hervorzurufen. Z.B. mittels Versteifungen oder sonstigen Streben können Teile des Rahmens auch starr verbunden werden, so dass der Rahmen oder die Teile in dem Anschlussbereich der Versteifungen sehr steif ausgebildet sind.

Eine einfache Ausgestaltung der Erfindung besteht in der Benutzung eines Gelenks an wenigstens einem der Teile, das jedoch sowohl mit einem Drehpunkt, als auch mit einer flexiblen Lasche oder dergleichen hergestellt werden kann.

Da der Rahmen und die Teile relativ stark ausgebildet sind, ist es sinnvoll, die Bewegung der Teile durch Kraftmittel zu bewirken, z.B. durch Hydraulik-, Pneumatik- oder Elektromotoren, die direkt oder über Gestänge oder Seilzüge an den zu verstellenden Teilen des Rahmens angreifen. Dabei ist eine Lösung, bei der ein Hydraulikmotor zwischen den freien Enden der beiden Schenkel des "U" eingespannt ist, wohl die einfachste.

Das oder die Kraftmittel können die Teile dann verstellen, wenn ein Ballen ausgeworfen wird, um seinen Austritt sicherzustellen; sie können aber auch abhängig von der an den Seitenwänden mittels Sensoren ermittelten Reibung des Rundballens während des Betriebs beaufschlagt werden. Auf diese Weise kann der Leistungsbedarf zum Antrieb der Rundballenpresse gesteuert, es kann Schlupf an den Pressriemen oder -rollen vermieden und es kann möglicherweise auch die Ballendichte beeinflusst werden.

Der Rahmen oder dessen Teile können mittels der Kraftmittel in jede ihrer Endstellung gebracht werden; sie können aber auch stets eine innere oder äußere Endstellung einnehmen und aus dieser heraus mittels der Kraftmittel bewegt werden.

Damit sowohl eine größere Verstellung der Teile mit den Seitenwänden möglich ist, als auch Belastungen an den Lagern der Riemenführungsrollen, von Antriebswellen und dergleichen unterbleiben, sind die Lager so ausgebildet oder angebracht, dass an deren Innen- oder Außenring eine Axialbewegung möglich ist.

Ein Verfahren zum Erreichen der jeweils gewünschten Reibung geht von vorgegebenen Sollwerten aus, die z.B. für den Entladevorgang des Rundballens, für den Ballenbildungsvorgang oder den Netzbindevorgang erstellt wurden. Dann wird entweder der den Sollwerten zugrunde liegende Ist-Zustand ermittelt, z.B. die Stellung eines Ballenbildungskammertors, oder die Reibung zwischen dem Rundballen und den Seitenwänden. Schließlich wird ein Stellsignal für ein Kraftmittel betätigt, das den Rahmen oder dessen Teile entsprechend verstellt. Die Reibung während des Ballenbildungsbetriebs kann an der Hitzeentwicklung an den Seitenwänden, an der Ausbiegung der Seitenwände, den auf das Kraftmittel wirkenden Kräften, dem Bewegungswiderstand der Riemen, dem zum Betrieb der Rundballenpresse erforderlichen Leistungsbedarf und dergleichen ermittelt werden. Bei dem Ballenbildungskammertor kann es sich sowohl um eines herkömmlicher Bauart handeln, das um eine oben gelegene Schwenkachse beweglich ist, oder um eines, das um eine im Wesentlichen in der Mitte der Ballenbildungskammer gelegene Achse schwenkbar ist.

In der Zeichnung ist ein nachfolgend näher beschriebenes Ausführungsbeispiel der Erfindung dargestellt. Es zeigt:
- Fig. 1: eine Rundballenpresse in einer Stellung für den Ballenbildungsbetrieb in Seitenansicht und schematischer Darstellung,
- Fig. 2: die Rundballenpresse nach Figur 1 in einer Ansicht von hinten,
- Fig. 3: die Rundballenpresse gemäß Figur 1 in einer Stellung für den Ballenentladebetrieb, und
- Fig. 4: die Rundballenpresse gemäß Figur 2 in der Stellung für den Ballenentladebetrieb.

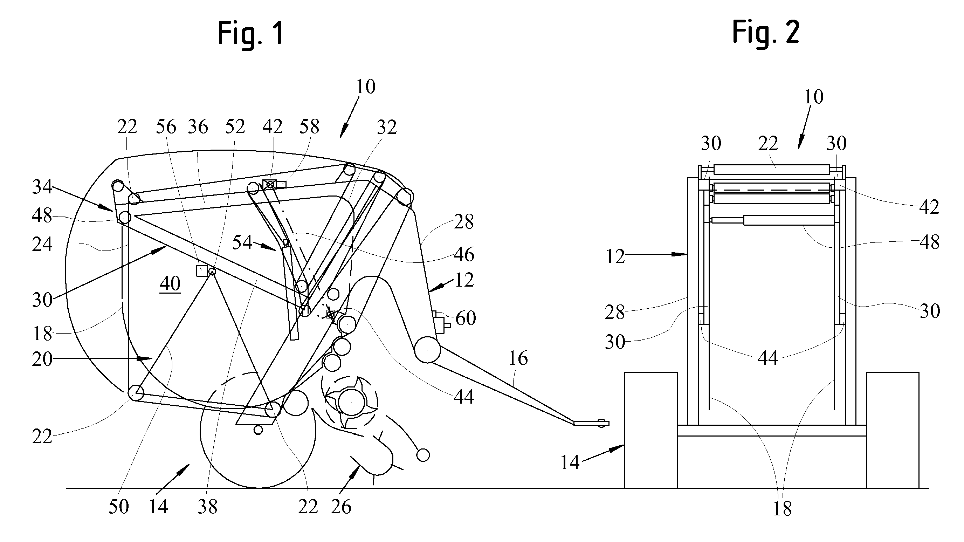

Eine in Figur 1 gezeigte Rundballenpresse 10 enthält einen Rahmen 12, ein Fahrgestell 14, eine Deichsel 16, Seitenwände 18, ein Ballenbildungskammertor 20, Rollen 22, Pressmittel 24 und eine Zuführeinheit 26.

Die dargestellte Rundballenpresse 10 ist so ausgebildet, dass sie Rundballen unterschiedlichen Durchmessers bilden kann; dies ist jedoch nicht zwingend, da die Erfindung auch bei solchen angewandt werden kann, die Rundballen gleicher Größe herstellen. Ansonsten funktioniert die Rundballenpresse 10 wie andere Rundballenpressen.

Der Rahmen 12 enthält einen Vorderteil 28, der sich im Wesentlichen aufrecht erstreckt und das Fahrgestell 14 mit der Deichsel 16 fest verbindet; hierzu hat er auf jeder Seite der Rundballenpresse einen Pfosten oder dergleichen. Dieser Vorderteil ist in dem vorliegenden Ausführungsbeispiel mit dem Fahrgestell 14 und der Deichsel 16 als eine starre Einheit ausgebildet und bildet die eigentliche Tragstruktur der Rundballenpresse 10; in einem anderen Ausführungsbeispiel kann der Vorderteil 28 selbst flexibel ausgebildet sein und so auseinander gedrückt werden.

Der Rahmen 12 enthält außerdem einen linken und einen rechten Teil 30, die in Seitenansicht in diesem Ausführungsbeispiel nahezu als ein rechtwinkliges Dreieck ausgebildet sind. Diese Teile 30 sind mit ihrem vorderen Endbereich an den Vorderteil 28 angeschlossen, und zwar entweder beweglich über Gelenke, Schraubverbindungen, nachgiebige Laschen oder angeschweißt, wie in dem vorliegenden Fall. Der kleinste und nur ansatzweise vorhandene Schenkel 32 des Dreiecks deckt sich im Wesentlichen mit dem Vorderteil 28 bzw. wird von diesem gebildet oder liegt in einem anderen Ausführungsbeispiel an dessen Innenfläche an. Ein Eckbereich 34 des Dreiecks erstreckt sich in dem rückwärtigen oberen Eckbereich der Rundballenpresse 10, so dass ein oberer Schenkel 36 - die Hypothenuse oder jedenfalls der längste Schenkel - fast waagrecht verläuft. Der mittlere oder mittelgroße Schenkel 38 erstreckt sich von vorne unten an dem Vorderteil 28 über den Mittenbereich einer Ballenbildungskammer 40 nach hinten oben zu dem Eckbereich 34. Die Teile 30 werden nahezu auf der Hälfte ihrer Länge in der Längsrichtung der Rundballenpresse 10 gesehen, von einer oberen Versteifung 42 verbunden, die an die oberen Schenkel 36 angeschweißt oder angeschraubt ist. Des weiteren ist auf jeder Seite eine untere Versteifung 44 vorgesehen, die jeweils den rechten bzw. linken Teil 30 starr mit dem Vorderteil 28 verbindet. Die Verbindung der Teile 30 mittels der Versteifung 42 und deren starrer Anschluß an den Vorderteil 28 mittels der Versteifung 44 hat zur Folge, dass der Rahmen 12 in dem Bereich der Versteifungen 42, 44 nicht auseinander gebogen werden kann; mithin ergibt eine durch die beiden Versteifungen 42, 44 verlaufende gedachte Schwenkachse 46. Die Lage der Versteifungen 42, 44 kann so gewählt werden, dass sich die Schwenkachse 46 an einer gewünschten Stelle befindet, wodurch das Bewegungsverhalten der Teile 30 beeinflusst werden kann. Insbesondere kann die Lage der Versteifungen 42, 44 je nach Modell der Rundballenpresse verändert werden.

Zwischen den Eckbereichen der beiden Teile 30 ist ein Kraftmittel 48, das in dem vorliegenden Ausführungsbeispiel als ein linearer Hydraulikmotor, ein sogenannter Hydraulikzylinder, ausgebildet ist und ein- bzw. ausgefahren werden kann, angeordnet, wobei ein kleiner Hub von wenigen Zentimetern ausreicht. Da das Kraftmittel 48 nur in einer Richtung aktiv wirkt, kann es sich im Falle eines Hydraulik- oder Pneumatikmotors um einen einfachwirkenden handeln. In dem vorliegenden Ausführungsbeispiel ist die Ausrichtung der Teile 30 so gewählt, dass sie in einer Normalstellung parallel zueinander verlaufen, d.h. das Kraftmittel 48 drückt die Teile 30 auseinander und wird aufgrund der Elastizität der Teile 30 bei Drucklosigkeit zusammengeschoben. Wegen der Anordnung des Kraftmittels 48 in den Eckbereichen ergibt sich ein großer Hebelarm und dieser muss keine hohen Kräfte aufbringen; offensichtlich könnte das Kraftmittel 48 auch an einer anderen Stelle angreifen, wobei dann allerdings auf eventuelle Torsionskräfte oder Biegungen in anderen Richtungen zu achten wäre.

Die Seitenwände 18 sind als ein- oder mehrteilige Bleche mit außenliegenden Verstärkungen ausgebildet, die sich im Wesentlichen über den Querschnitt der Ballenbildungskammer 40 erstrecken. Die Seitenwände 18 sind an die Innenseiten der Teile 30 angeschraubt oder angeschweißt und begrenzen die Ballenbildungskammer 40 an den Stirnflächen eines nicht gezeigten Rundballens. Infolge der Verbindung der Seitenwände 18 mit den Teilen 30 bewegen sich auch die Seitenwände 18, wenn die Teile 30 auseinander gedrückt werden, und somit von den Stirnflächen des Rundballens weg, wodurch sich die Reibung an den Seitenwänden 18 verringert oder gar aufhebt.

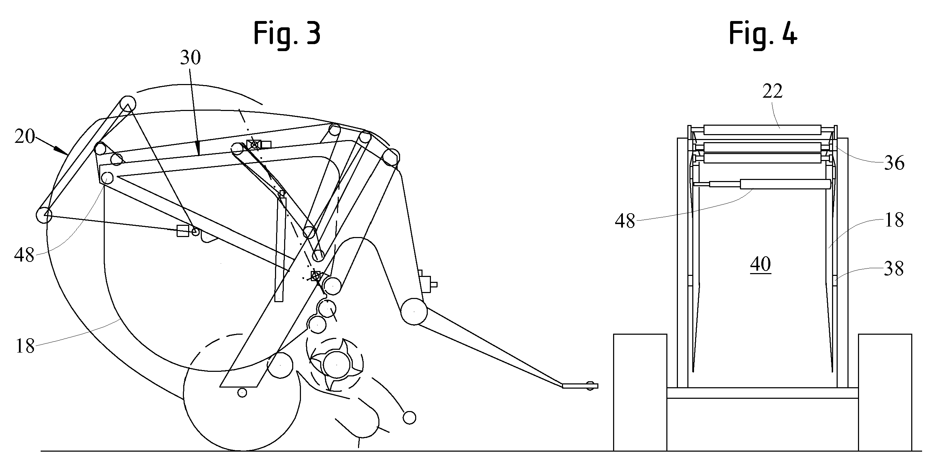

Das Ballenbildungskammertor 20 enthält zwei dreiecksförmige Schwenkrahmen 50, die mittels nicht gezeigter aber an sich bekannter Stellmittel um ein Lager 52 im Mittenbereich der Ballenbildungskammer 40 vertikal aus einer in Figur 1 gezeigten unteren Stellung in eine in Figur 3 gezeigte obere Stellung geschwenkt werden können. In dem unteren Bereich der Schwenkrahmen 50 sind quer zur Längsmittenebene der Rundballenpresse 10 verlaufende Rollen 22 vorgesehen, über die die Pressmittel 24 verlaufen können und den Rundballen tragen - auch sie sind Teil des Ballenbildungskammertors 20. In der unteren Stellung der Schwenkrahmen 50 schließen diese mit den Rollen 22 und den Pressmitteln 24 die Ballenbildungskammer 20 nach unten hin ab. Wenn das Ballenbildungskammertor 20 nach oben geschwenkt ist, geben die Rollen 22 und die darüber verlaufenden Trume der Pressmittel 24 die Ballenbildungskammer 40 nach unten hin frei. Die Schwenkrahmen 50 verlaufen auf der Außenseite der Seitenwände 18, wo sich auch die Lager 52 befinden; die auf den Schwenkrahmen 50 getragenen Rollen 22 erstrecken sich jedoch außerhalb der Kontur der Seitenwände 18. Da sich die Lager 52 an den Seitenwänden 18 oder alternativ an den unteren, mittleren Schenkeln 38 der Teile 30 befinden, bewegen auch sie sich mit, wenn die Teile 30 auseinander gedrückt werden; dabei können sich entweder die Lager 52 in den Schwenkrahmen 50 axial bewegen oder letztere werden ebenfalls leicht nach außen gebogen.

Die Rollen 22 sind sowohl auf den Schwenkrahmen 50, als auch an den Seitenwänden 18, aber auch auf einer Spannvorrichtung 54 vorgesehen, die sich im vorderen oberen Bereich der Rundballenpresse 10 befindet und Spannarme, Federn und dergleichen aufweist, wie dies an sich bekannt ist. Weitere Rollen 22 sind in ebenfalls bekannter Weise im Bereich der Zuführeinheit 26 vorgesehen. Insgesamt dienen die Rollen 22 dazu, die bandartigen Pressmittel 24 zu tragen, anzutreiben und umzulenken. Die im Bereich der Teile 30 gelegenen Rollen 22 sind derart gelagert, dass eine Bewegung der Teile 30 in der Längserstreckungsrichtung der Rollen 22 möglich ist, was z.B. mit Gleitlagern und dergleichen erreicht werden kann.

Die Pressmittel 24 sind als endlose Riemen oder Stabketten ausgebildet und verlaufen gemäß der Zeichnung und in an sich bekannter Weise über die Rollen 22. Die Ballenbildungskammer 40 könnte auch von stationär oder beweglich angebrachten Rollen 22 umgeben sein, wie dies ebenfalls im Stand der Technik bekannt ist. Die Pressmittel 24 bilden eine von der Zuführeinheit 26 ausgehende Schlaufe, in der sich die Ballenbildungskammer 40 bildet und das aufgenommene Pressgut zu einem Rundballen aufgerollt wird, der an seinen Stirnflächen von den Seitenwänden 18 begrenzt wird.

Die Zuführeinheit 26 enthält in diesem Fall eine sogenannte Pick-Up und einen Zuführrotor ohne Schneidvorrichtung; diese stehen nur exemplarisch für eine Vielzahl anderer Zuführeinheiten 26, die insgesamt bekannt sind und keiner näheren Beschreibung bedürfen.

Auf der Rundballenpresse 10 sind in diesem Fall drei Sensoren vorgesehen, von denen ein Sensor 56 die Stellung des Ballenbildungskammertors 20, ein Sensor 58 die in dem Rahmen 12 herrschende Spannung in der Richtung der Drehachse des Rundballens und ein Sensor 60 den Leistungsbedarf zum Antrieb erfasst. Mittels wenigstens einem dieser Sensoren 56, 58, 60 und einer Steuervorrichtung kann ermittelt werden, wie groß die Reibung an den Seitenwänden 18 sein könnte und auf einen Sollwert eingestellt werden. Ebenfalls kann der Entladevorgang des Rundballens aus der Ballenbildungskammer 40 erfasst und verfolgt werden, woraufhin ein Signal an das Kraftmittel 48 gegeben wird, die Ballenbildungskammer 40 zu erweitern, um die Reibung zu reduzieren.

## Patentansprüche

1. Rundballenpresse (10) mit einem Rahmen (12) zur Aufnahme von Seitenwänden (18) einer Ballenbildungskammer (40), wobei die die Seitenwände (18) tragende Teile (30) des Rahmens (12) voneinander wegbewegbar sind, **dadurch gekennzeichnet, dass** die Bewegung der die Seitenwände (18) tragenden Teile (30) durch Kraftmittel (48) bewirkbar und die Kraftmittel (48) in Abhängigkeit von dem Betriebszustand betätigbar sind, wobei Sensoren (56, 58, 60) vorgesehen sind, mittels welchen die Reibung eines Rundballens an den Seitenwänden (18) ermittelbar ist, und die Kraftmittel (48) in Abhängigkeit der Sensoren (56, 58, 60) während des Betriebs beaufschlagbar sind.

2. Rundballenpresse nach Anspruch 1, **dadurch gekennzeichnet, dass** die die Seitenwände (18) tragenden Teile (30) unter Ausnutzung der stofflichen Elastizität des Rahmens (12) oder der Teile (30) relativ zueinander beweglich sind.

3. Rundballenpresse nach Anspruch 2, **dadurch gekennzeichnet, dass** der Rahmen (12) oder die die Seitenwände (18) tragenden Teile (30) mit Zonen verringerter oder erhöhter Steifigkeit ausgebildet oder zusammengesetzt sind.

4. Rundballenpresse nach Anspruch 1, **dadurch gekennzeichnet, dass** die die Seitenwände (18) tragenden Teile (30) über ein Gelenk angebracht sind.

5. Rundballenpresse nach einem oder mehreren der vorherigen Ansprüche, **dadurch gekennzeichnet, dass** die die Seitenwände (18) tragenden Teile (30) und/oder der Rahmen (12) in eine der Endstellungen vorgespannt sind.

6. Rundballenpresse nach einem oder mehreren der vorherigen Ansprüche, **dadurch gekennzeichnet, dass** in, an oder auf den Teilen (30) vorgesehene Lager für Rollen (22) und/oder Lager (52) für ein Ballenbildungskammertor (20) eine Axialbewegung zulassen.

7. Verfahren zur Änderung der Reibung zwischen den Seitenwänden (18) einer Rundballenpresse (10) und den Stirnflächen eines in einer Ballenbildungskammer (40) gebildeten Rundballens, **dadurch gekennzeichnet, dass**:
a) die Reibung direkt oder indirekt oder der Betriebszustand der Rundballenpresse (10) ermittelt wird,
b) die ermittelten Werte mit Sollwerten verglichen werden,
c) wenigstens ein auf den Rahmen (12) oder dessen die Seitenwände (18) tragende Teile (30) wirkendes Kraftmittel (48) zur Angleichung des Istwerts an den Sollwert betätigt wird.

## Claims

1. Round baler (10) having a frame (12) for receiving side walls (18) of a baling chamber (40), wherein those parts (30) of the frame (12) which support the side walls (18) can be moved farther apart, **characterized in that** the movement of the parts (30) which support the side walls (18) can be effected by power means (48) and the power means (48) can be actuated in dependence on the operating state, wherein sensors (56, 58, 60), by means of which the friction of a round bale on the side walls (18) is determinable, are provided, the power means (48), dependent on the sensors (56, 58, 60), being impingeable during operation.

2. Round baler according to Claim 1, **characterized in that** the parts (30) supporting the side walls (18) can be moved relative to one another by exploiting the material elasticity of the frame (12) or of the parts (30).

3. Round baler according to Claim 2, **characterized in that** the frame (12) or the parts (30) which support the side walls (18) are configured or assembled comprising zones of reduced or increased stiffness.

4. Round baler according to Claim 1, **characterized in that** the parts (30) supporting the side walls (18) are fitted via a joint.

5. Round baler according to one or more of the previous claims, **characterized in that** the parts (30) which support the side walls (18) and/or the frame (12) are pretensioned into one of the end settings.

6. Round baler according to one or more of the previous claims, **characterized in that** bearings for rollers (22), which bearings are provided in, on the side of or on the parts (30), and/or bearings (52) for a baling chamber door (20), permit an axial movement.

7. Method for altering the friction between the side walls (18) of a round baler (10) and the end faces of a round bale formed in a baling chamber (40), **characterized in that**:
a) the friction is determined directly or indirectly or the operating state of the round baler (10) is determined,
b) the determined values are compared with desired values,
c) at least one power means (48), which acts upon the frame (12) or upon those parts (30) thereof which support the side walls (18), is actuated to match the actual value to the desired value.

## Revendications

1. Presse à ballots rond (10) avec un cadre (12) destiné à recevoir des parois latérales (18) d'une chambre (40) de formation des balles, les parties (30) du cadre (12) qui portent les parois latérales (18) pouvant s'éloigner les unes des autres, **caractérisée en ce que** le déplacement des parties (30) portant les parois latérales (18) peut être provoqué par des moyens de force (48) et les moyens de force (48) sont susceptibles d'être actionnés en fonction de l'état de service, des capteurs (56, 58, 60) étant prévus, au moyen desquels le frottement d'un ballot rond sur les parois latérales (18) est susceptible d'être déterminé et les moyens de force (48) étant susceptibles d'être alimentés pendant le service, en fonction des capteurs (56, 58, 60).

2. Presse à ballots ronds selon la revendication 1, **caractérisée en ce que** les parties (30) portant les parois latérales (18) sont déplaçables les unes par rapport aux autres sous exploitation de l'élasticité de matière du cadre (12) ou des parties (30).

3. Presse à ballots ronds selon la revendication 2, **caractérisée en ce que** le cadre (12) ou les parties (30) portant les parois latérales (18) sont conçu (e) s ou assemblé(e)s avec des zones de rigidité réduite ou élevée.

4. Presse à ballots ronds selon la revendication 1, **caractérisée en ce que** les parties (30) portant les parois latérales (18) sont montées par l'intermédiaire d'une articulation.

5. Presse à ballots ronds selon l'une quelconque ou plusieurs des revendications précédentes, **caractérisée en ce que** les parties (30) portant les parois latérales (18) et/ou le cadre (12) sont précontraint(e)s dans l'une des positions finales.

6. Presse à ballots ronds selon l'une quelconque ou plusieurs des revendications précédentes, **caractérisée en ce que** des paliers pour galets (22) et/ou des paliers (52) pour un portail (20) de chambre de formation de balles prévus dans les, sur les ou au-dessus des parties (30) admettent un déplacement axial.

7. Procédé destiné à modifier le frottement entre les parois latérales (18) d'une presse à ballots ronds (10) et les surfaces frontales d'un ballot rond formé dans une chambre (40) de formation de ballots, **caractérisé en ce**
a) **qu'**on détermine directement ou indirectement le frottement ou l'état de service de la presse à ballots ronds (10),
b) **qu'**on compare les valeurs déterminées avec des valeurs de consigne,
c) **qu'**on actionne au moins un moyen de force (48) agissant sur le cadre (12) ou sur les parties (30) de ce dernier portant les parois latérales (18) pour adapter la valeur réelle à la valeur de consigne.
